# EUROPEAN PATENT APPLICATION

(11) **EP 3 312 009 A1**
(43) Date of publication of application: **25.04.2018**
(21) Application number: 17196918.1
(22) Date of filing: 17.10.2017
(51) Int. Cl.: B33Y 10/00, B33Y 30/00, B33Y 50/02, B29C 64/393, B29C 64/10, B29C 64/295, G01J 5/00

(54) **METHOD AND SYSTEM FOR THERMOGRAPHIC INSPECTION OF ADDITIVE MANUFACTURED PARTS**

(30) Priority: 18.10.2016 US 201615296354
(71) Applicant: General Electric Company, Schenectady, NY 12345 (US)
(72) Inventor: KOTTILINGAM, Srikanth Chandrudu, Greenville, SC 29615 (US); GOING, Claude Leonard, Jr., Greenville, SC 29615-4614 (US); DEHGHANNIRI, Ehsan, Schenectady, NY 12345-6000 (US)
(74) Representative: Foster, Christopher Michael

(57) **Abstract**

A method (600) for inspection of additive manufactured parts (140) and monitoring operational performance of an additive manufacturing apparatus (100) is provided. The method (600) includes a heating step (620) for heating an area of a build platform (112) on which at least one part (140) is built by the additive manufacturing apparatus (100). An obtaining step (630) is used for obtaining, in real-time during an additively manufactured build process, a thermographic scan of the area of the build platform (112). An evaluating step (640) evaluates, by a processor (802), the thermographic scan. A determining step (650) determines, based on the evaluating (640), whether an operational flaw with the additive manufacturing apparatus has occurred or a defect in the at least one part has occurred.

## Description

### BACKGROUND OF THE INVENTION

Additive manufacturing is a process by which a three-dimensional structure is built, usually in a series of layers, based on a digital model of the structure. The process is sometimes referred to as three-dimensional (3D) printing or 3D rapid prototyping, and the term "print" is often used even though some examples of the technology rely on sintering or melting/fusing by way of an energy source to form the structure, rather than "printing" in the traditional sense where material is deposited at select locations. Examples of additive manufacturing techniques include powder bed fusion, fused deposition modeling, electron beam melting (EBM), laminated object manufacturing, selective laser sintering (SLS), direct metal laser sintering (DMLS), direct metal laser melting (DMLM), selective laser melting (SLM), and stereolithography, among others. Although 3D printing technology is continually developing, the process to build a structure layer-by-layer is relatively slow, with some builds taking several days to complete.

One of the disadvantages of current additive manufacturing processing relates to quality assurance. There is typically some amount of analysis to determine whether the produced part meets the manufacturing thresholds and design criteria. In some examples, the part may have to be dissected in order to test whether a certain lot of products or a sampling has satisfied the design limits. This can lead to considerable inefficiency when, for example, it is later determined that a production lot is defective due to a machining or design problem.

### BRIEF DESCRIPTION OF THE INVENTION

According to one aspect, A method for inspection of additive manufactured parts and monitoring operational performance of an additive manufacturing apparatus is provided. The method includes a heating step for heating an area of a build platform on which at least one part is built by the additive manufacturing apparatus. An obtaining step is used for obtaining, in real-time during an additively manufactured build process, a thermographic scan of the area of the build platform. An evaluating step evaluates, by a processor, the thermographic scan. A determining step determines, based on the evaluating, whether an operational flaw with the additive manufacturing apparatus has occurred or a defect in the at least one part has occurred.

According to another aspect, a system is provided for inspection of additive manufactured parts and monitoring operational performance of an additive manufacturing apparatus. The system includes a heater, an infrared imaging device, a memory and a processor in communication with the memory. The system is configured to perform a heating step that heats with the heater an area of a build platform on which at least one part is built by the additive manufacturing apparatus. An obtaining step obtains with the infrared imaging device, in real-time during an additively manufactured build process, a thermographic scan of the area of the build platform and/or of the part(s). An evaluating step evaluates, by the processor, the thermographic scan. A determining step determines, based on the evaluating, whether an operational flaw with the additive manufacturing apparatus has occurred, or if a defect in the at least one part has occurred.

According to yet another aspect, a computer program product is provided for inspection of additive manufactured parts and monitoring operational performance of an additive manufacturing apparatus. The computer program product includes a non-transitory computer readable storage medium readable by a processor and storing instructions for execution by the process to perform a method. The method includes a heating step that heats with a heater an area of a build platform on which at least one part is built by the additive manufacturing apparatus. An obtaining step obtains with an infrared imaging device, in real-time during an additively manufactured build process, a thermographic scan of the area of the build platform or of the part(s). An evaluating step evaluates, by the processor, the thermographic scan. A determining step determines, based on the evaluating, whether an operational flaw with the additive manufacturing apparatus has occurred or a defect in the at least one part has occurred.

Additional features and advantages are realized through the concepts of aspects of the present invention. Other embodiments and aspects of the invention are described in detail herein and are considered a part of the claimed invention.

### BRIEF DESCRIPTION OF THE DRAWINGS

One or more aspects of the present invention are particularly pointed out and distinctly claimed as examples in the claims at the conclusion of the specification. The foregoing and other objects, features, and advantages of the invention are apparent from the following detailed description taken in conjunction with the accompanying drawings in which:
FIG. 1 illustrates a cross-sectional view of an additive manufacturing apparatus, in accordance with aspects described herein;
FIG. 2 illustrates a simplified view of a calibration block having known defects, in accordance with aspects described herein;
FIG. 3 illustrates a cross-sectional view of an additive manufacturing apparatus, in accordance with aspects described herein;
FIG. 4 illustrates a cross-sectional view of an additive manufacturing apparatus, in accordance with aspects described herein;
FIG. 5 illustrates a cross-sectional view of an additive manufacturing apparatus, in accordance with aspects described herein;
FIG. 6 is a flowchart of a data processing and scanning method, in accordance with aspects described herein;
FIG. 7 illustrates a schematic representation of the control system and the additive manufacturing apparatus, in accordance with aspects described herein;
FIG. 8 illustrates one example of a data processing system to incorporate and use one or more aspects described herein; and
FIG. 9 illustrates one example of a computer program product to incorporate one or more aspects described herein.

### DETAILED DESCRIPTION OF THE INVENTION

The phrase "additive manufacturing apparatus" is used interchangeably herein with the phrase "printing apparatus" and term "printer", and the term "print" is used interchangeably herein with the word "build", referring to the action for building a structure by an additive manufacturing apparatus, regardless of the particular additive manufacturing technology being used to form the structure. The terms "structure" and "part" are also used interchangeably, and both terms refer to an additively manufactured physical object (e.g., a machine part, a tool, or etc.). As used herein, print and printing refer to the various forms of additive manufacturing and include three-dimensional (3D) printing or 3D rapid prototyping, as well as sintering or melting/fusing technologies. Examples of additive manufacturing or printing techniques include powder bed fusion, fused deposition modeling, electron beam melting (EBM), laminated object manufacturing, selective laser sintering (SLS), direct metal laser sintering (DMLS), direct metal laser melting (DMLM), selective laser melting (SLM), and stereolithography, among others.

Assurance that a build process is progressing as planned is important for cost and quality reasons. At the end of a build cycle to build one or more three-dimensional parts, an operator of the additive manufacturing apparatus may find that the parts are defective or unusable because of a failure with the additive manufacturing apparatus during the build cycle. This can be especially problematic when building expensive parts, such as molds for casting structures having complex geometries.

A thermographic scanning system and method are disclosed herein that may be used to monitor the building of layers of one or more objects being built by an additive manufacturing apparatus, and, in one embodiment, to detect operational flaws as they occur, (i.e. during the build process rather than afterward, as an example). In a further embodiment, evaluation/analysis of thermographic scans acquired during the build process is performed as part of post-processing (and not as part of the real-time acquisition of scanned data). Real-time acquisition as used herein refers to the scans of individual layer(s) of the structure as the structure is being built ("printed"). Real-time analysis refers to evaluation of the acquired thermographic scans of the various layers.

Operational flaws may include, as examples, errors with the part(s), build process, or additive manufacturing apparatus, or indicators that one or more errors are likely to occur with the part(s), build process, or additive manufacturing apparatus, or lack of fusion, porosity or micro/macro cracks. In some embodiments, action(s) may be taken responsive to observing that an operational flaw has occurred. For instance, remedial actions may be taken so that the flaw can be corrected, the build process stopped, the problem fixed, a new build started, etc. In other cases, a flaw may be detected but is determined to be insignificant, therefore the build process may continue.

Thermographic inspection is the nondestructive testing of objects through imaging of thermal patterns on the object's surface. Thermographic inspection is often preferred to other nondestructive testing techniques such as ultrasonic inspection and radiographic inspection, for various advantages offered by thermographic inspection. Thermographic inspection is non-contact, non-intrusive, allows for detection of subsurface detects close to the surface, allows for inspection of large surfaces, and offers high speed inspection. One form of thermographic inspection is transient thermography. Transient thermography involves observing the temperature distribution on the surface of an object under test as it is subjected to a thermal transient such as a pulse of heat or a pulse of heat sink, and then allowed to return to ambient temperature. Any flaws present are detected as abnormalities in the surface temperature distribution during this thermal transient. Transient thermography is particularly well suited to the inspection of composite materials. The relatively low thermal conductivity of composite materials results in relatively long-lived thermal transients, therefore making the thermal transient easy to detect with a thermal camera.

Some thermographic inspection techniques are operator dependent techniques, involving an operator to watch a thermal video of the object under test. The operator then observes the video for changes in contrast caused due to flaws within the object. Such techniques are skill intensive and require much manual effort. Automated thermographic inspection techniques use a heat source such as a high intensity flash lamp to heat the surface of an object under test. An infrared camera then takes a series of thermal images or thermograms of the object under test. The images are then post processed to identify features in the object under test.

Provided is an ability to thermographically observe a build process that may take hours or days to complete in order to detect and react to potential operational flaws with the additive manufacturing apparatus and/or errors with one or more printed layers. Also provided is the ability to communicate indications of the operational flaws to operators early in the build process as, or before, they occur, so that a failed build can be stopped prior to its completion. A new build may then be started earlier than it otherwise would have been (i.e. had the failure been discovered only after the failed build process completes). From a manufacturing resources perspective, wasted materials usage and wasted build time are reduced. In addition, as described below, rather than stopping an entire build process, printing of individual parts that are showing flaws or otherwise undesired features can be turned off so as the flaws/features do not cause the build to fail, which could cause errors with all of the structures in the build. By terminating building of individual parts that are becoming problematic, manufacturing yields and machine uptime can be maximized.

Some problems that may be observed during the monitoring of a build process as described herein include, but are not limited to, dimensional errors, distortion, lack of fusion, porosity, micro cracking or macro cracking in the printed structures, malfunctioning of a roller/planarizer or other component of the printing apparatus, poor layer surface finish, delamination of the structures, misplacement, excess, or absence of build material, or any other additive manufacturing errors. In general, the monitoring can monitor for anything that can cause the built part to fail or that can indicate that that additive manufacturing apparatus has failed, is about to fail, or needs maintenance, as examples.

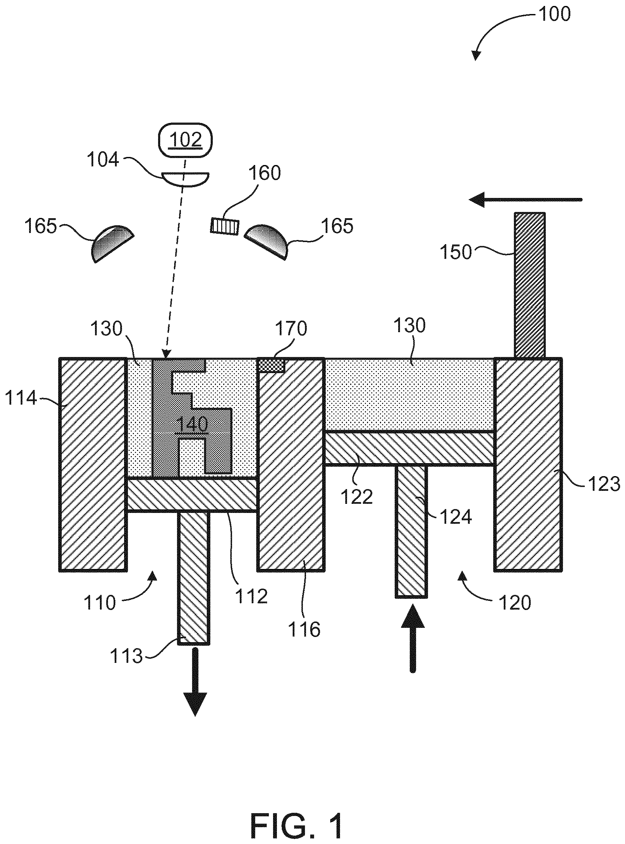

An example additive manufacturing apparatus and associated process in accordance with aspects described herein are presented with reference to FIGS. 1-9, in the context of printed parts. The parts in this example are built out of printed metallic or ferro-magnetic material, though other materials are possible.

FIG. 1 depicts one example of an additive manufacturing apparatus, in accordance with aspects described herein. As is seen in FIG. 1, printing apparatus 100 (or an additive manufacturing apparatus) is a powder bed fusion type of 3D printing device that includes a laser 102 and lens 104. A build section 110 is located adjacent to a dispensing section 120. The build section includes the build platform 112, onto which the part 140 (e.g., the 3D printed part or structure) is built. The build platform is connected to a shaft or support 113 that lowers the build platform in increments as the part 140 is built. At the start of 3D printing, the build platform will be at a high position, and as each layer of the part 140 is formed the build platform will lower accordingly. The build platform 112 or build section 110 is enclosed on the sides by walls 114 and 116 (additional walls may be used, but are not shown).

The dispensing section 120 contains a supply of powder 130 supported by dispensing platform 122 and contained by walls 116 and 123. The dispensing platform 122 is raised up by shaft or support 124. When a new layer of powder is required in build section 110, the dispensing platform 122 will raise up by a predetermined amount so that recoating blade 150 can push the powder 130 from section 120 over to section 110. In this manner, a new layer of powder is spread over part 140 so that the laser 102 may fuse the next layer of the part 140. The recoating blade 150 will then return to its position above wall 123, and be ready for the next layer.

To inspect part 140 and monitor operational performance of the additive manufacturing apparatus 100, an infrared imaging device 160 is provided to thermographically image or scan the upper layers of the build platform and part(s) 140. A heater 165 is also provided and is configured for heating the upper surface build platform and/or the upper layers of part 140. The infrared imaging device 160 may be an infrared camera, a focal plane array infrared sensor, a vanadium oxide microbolometer array sensor or any other suitable device for capturing thermographic images in the infrared spectrum. The heater 165 may be a flash lamp, high intensity discharge tube flash unit, infrared lamp, a quartz lamp, a microwave tube, or the like. As will be described later, the heater may also be an induction heating unit or an ultrasonic heater. The heater 165 discharges a high intensity but short lived pulse of heat towards the top layer of the part 140. This heat is absorbed and then radiated towards the infrared imaging device 160. The infrared imaging device 160 then captures an image of this reflected heat pulse and the resulting image can be processed, evaluated and then a determination may be made as to the presence or absence of defects in part 140. The heater 165 may also comprise a plurality of heaters arranged symmetrically above the build platform as shown.

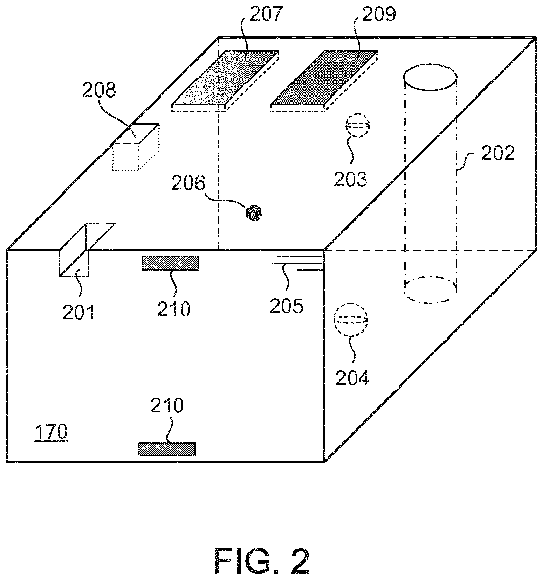

One or more calibration blocks 170 may be located on walls 114, 116 or on the build platform (not shown) to calibrate the infrared imaging device 160 prior to a scan operation. The calibration block(s) 170 are configured to be scanned by infrared imaging device 160 by being placed within the field of view of the device 160. The calibration block 170 may have different known artificial defects such as holes, notches, delamination, and voids that represent actual defects that can happen during the printing/build process. Referring to FIG. 2, a calibration block 170 is shown having various known defects and calibration areas. The known artificial defects may include a notch 201, hole 202, voids 203, 204, area of delamination 205, and inclusion 206. Calibration areas may include areas with known thermal characteristics, such as surface 207 with known reflectivity and emissivity, area 208 of the same material as the powder with known thickness close to the desired layer thickness, blackbody area/surface 209. Further, thermometers 210 may be located at different locations on the calibration block to measure the absolute temperature. Many different critical values such as reflectivity, emissivity and etc. can be measured using the designed calibration block of FIG. 2. Furthermore, the infrared imaging device 160 can be calibrated by first scanning the calibration block and comparing the result with a known good scan of the calibration block. If there are discrepancies beyond a predetermined threshold, then the device 160 response can be adjusted to normal expectations. Calibration can be done before every scan or after a selected number of scans.

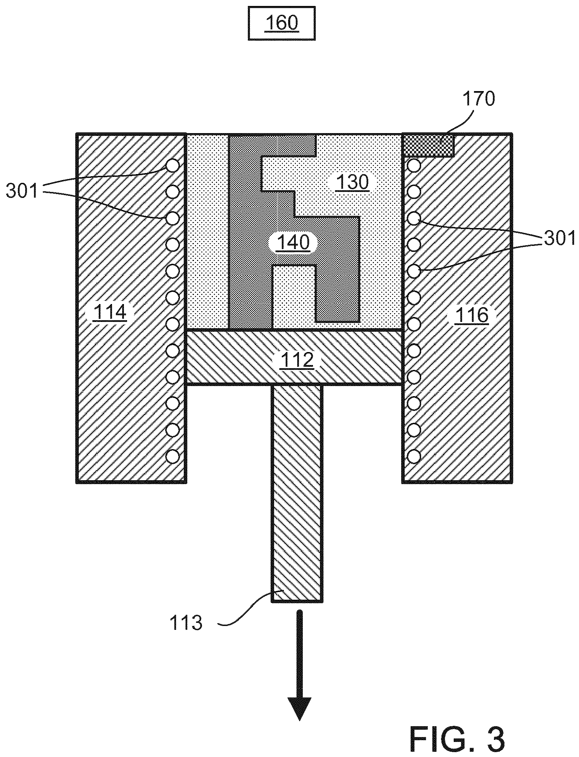

FIG. 3 illustrates a side, cross-sectional view of a system, in accordance with aspects described herein. The heating is accomplished by an induction heating unit 301. The coils of the induction heating unit may be embedded in the walls 114, 116 or placed above the build platform and around part 140. As the coils are energized (typically with an alternating current at different frequencies) eddy currents are formed within part 140. These eddy currents generate heat and the heat can be detected by infrared imaging device 160.

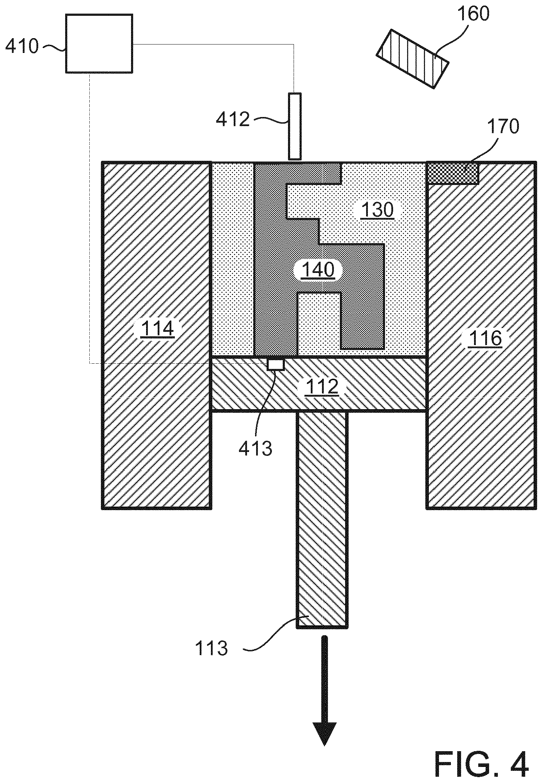

FIG. 4 illustrates a side, cross-sectional view of a system, in accordance with aspects described herein. The heating is accomplished by an ultrasonic vibration heater 410. The heater 410 includes an applicator 412 and ultrasonic vibrations induce thermal emissions from part 140. The thermal emissions from part 140 are captured by infrared imaging device 160. The applicator 412 may be disposed on an extendable arm (not shown), so that it can be retracted away from the build section and deployed over the build section as desired. Alternatively, ultrasound may be generated in the part 140 from an applicator 413 in or on the platform 112. Elastic waves will propagate in the part 140 and in case of internal flaws, such as cracks, the boundary faces move relative to each other (i.e. crack on the surface). The resulting rubbing and clapping of crack faces generate frictional heat, which is detected by means of the infrared imaging device (or camera) 160. Ultrasonic lock-in and ultrasonic sweep are two thermography approaches that may be used with the present invention.

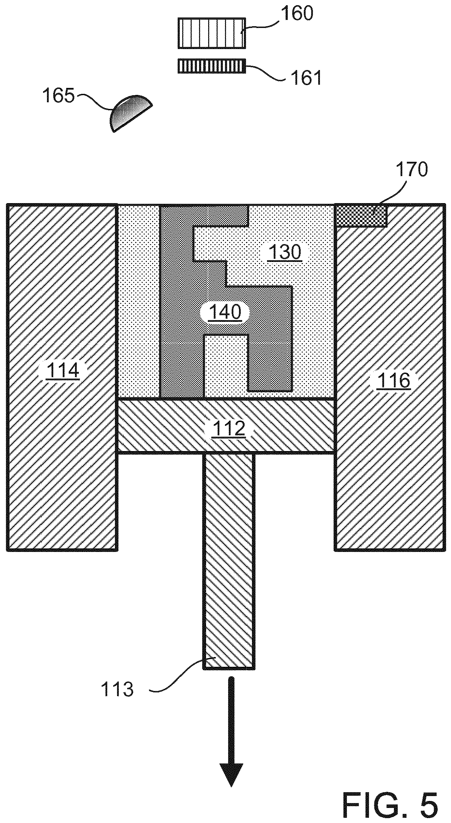

FIG. 5 illustrates a side, cross-sectional view of a system, in accordance with aspects described herein. The heater 165 is arranged above the build platform 112, and may be a flash lamp. The infrared imaging device 160 is paired with a filter 161 that is configured for use with device 160. The filter 161 may have a spectral response between about 0.8 µm and about 1,000 µm, or any subranges therebetween. The filter 161 is a bandpass filter that targets all or a portion of the infrared spectrum, thereby increasing the signal to noise ratio for infrared imaging device 160.

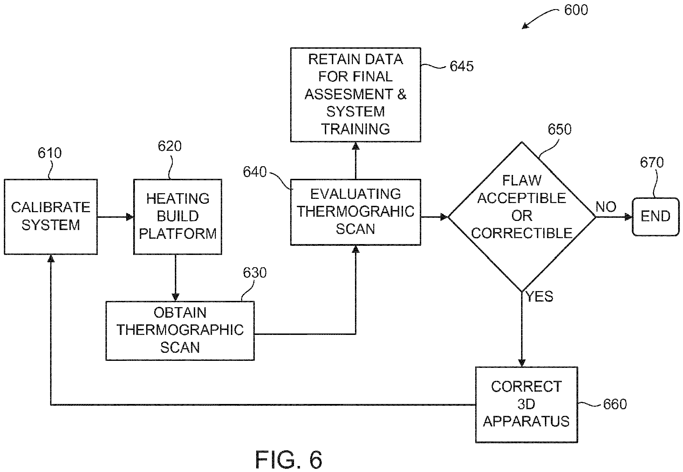

FIG. 6 is a flowchart of the method 600 for inspection of additive manufactured parts and monitoring operational performance of the additive manufacturing apparatus 100, in accordance with aspects described herein. The data extracted during thermographic scanning can be used for real time quality control, final quality control and feedback process control to correct the laser or machine properties. In process (i.e., real time) machine control can be used to remove or cure flaws during the 3D build process. In step 610, the infrared imaging device 160 may be calibrated. The calibration block 170 located so as to be within the field of view of infrared imaging device 160 (or vice-versa) and a scan is initiated. The response is compared to a known good response and responses of known artificial flaws in the calibration block in order to detect, evaluate, classify and size the defect or measure the layer thickness. If there is a discrepancy, the infrared imaging device (or output thereof) is modified to correct the error. This will yield a very reliable and repeatable scanning process. As non-limiting examples, the height of the infrared imaging device can affect the response thereof, or the amount of background light, or the ambient temperature may be factors that affect the response of infrared imaging device 160. Calibration blocks 170 are provided to have an accurate and repeatable test for each layer, and to optimize the sensitivity of the scanner/sensors, and to use known defects with known sizes so that the system can use their data for sizing and defect classification. The calibration block is also capable of defining critical values such as reflectivity and emissivity values. These known defects can be designed and modified according to the sensitivity and kind of defects needed to be detected and classified. For example, if the critical defect size is a void of 2 mm diameter, a void with 2 mm diameter can be artificially made in the calibration block 170. The system calibrates before scanning to have its response accurately adjusted. Alternatively, 2 mm void and a 2 mm inclusion can be located in the calibration block 170 to use their response for classifying the kind of defect.

In heating step 620, the build platform area, on which at least one part 140 is built, is heated. The heating is accomplished with a heater 165, such as a high intensity (and short duration) flash lamp, a quartz lamp or any other suitable device. The heater 165 subjects the parts 140 to a rapid heat pulse that is at least partially absorbed and then reflected by the parts 140 and the surrounding powder 130. The heating can also be done by eddy current induction or ultrasound, as previously described. In obtaining step 630, a thermographic scan of the build platform area and parts 140 is obtained in real-time during an additively manufactured build process. An infrared imaging device 160 is used to obtain the thermographic scan or image. The device 160 may be an infrared camera, a focal plane array infrared sensor, a vanadium oxide microbolometer array sensor, or any other suitable imaging device. In addition, the infrared imaging device may employ a filter 161 having a spectral response in the infrared spectrum (e.g., between about 0.8 µm and about 1,000 µm, or any subranges therebetween).

In evaluating step 640, the thermographic scan (or image) is evaluated, typically by a processor. The scan is analyzed and evaluated for areas or regions that may indicate presence of a defect in the part 140. For instance, the scan data may be evaluated to ascertain characteristics (dimensions, textures, layer thickness, composition, etc.) of the structure(s) being printed and compare these to a 'golden standard', such as a computer-aided design (CAD) specification for the structure. The CAD specification may be a specification that the additive manufacturing apparatus uses in building the structure. The comparison can assess whether the part is being built consistent with the CAD specification in order to identify possible distortions, deviations, defects or other flaws. Since, build quality is dependent on machine and material performance, the evaluation of the scans can additionally identify features in the data that suggest problems with the additive manufacturing apparatus, such as, lack of fusion, porosity or micro/macro cracks or other items that indicate a flaw. Thus, the data can be evaluated to not only detect errors in the part(s) being built as they are printed, and assign a part 'health' score to each part(s), but also monitor additive manufacturing apparatus health, indicating when the machine might require maintenance or adjustment and identifying what is needed for that maintenance/adjustment. In some examples, the evaluation is performed in real-time during the build process, though in other examples, the evaluation is performed at a later time. In step 645, the data is retained for final assessment, creating a statistical model and system training. The data in this step is retained in a memory for the final part/structure assessment, as well as for creating a statistical model, machine learning and system training. For example, the gathered data of the same layer of multiple defect-free parts can be used as an input to a machine learning algorithm such as Artificial Neural Networks (ANNs) to train the algorithm to be used for defect detection and classification of parts for that specific layer. One aspect of the current method is that after detecting the flaw, the method classifies the flaw so that the corrective action or decision can be made accordingly. Data corresponding to each layer is aggregated into a group corresponding to each part, and in this way a three dimensional "picture" is formed of the multiple layers in each part.

In step 650, a determination is made as to whether an operational flaw with the additive manufacturing apparatus has occurred or a defect in the part has occurred, and if the flaw and/or defect is acceptable or correctible or if the layer thickness is acceptable. Different decision making algorithms such as binary hypothesis testing, or Bayesian hypothesis testing can be used and optimized using the statistical model in step 645. For example, if the defect is smaller than a predetermined amount (e.g., less than 0.5 mm), then the build process can continue. If the flaw is correctible, then step 660 is used to correct the flaw. If the defect was an unfused area, then the laser could be directed to re-target that flawed area. However, if the defect is neither acceptable nor correctible, then the part is discarded and the build process for that part ends with step 670.

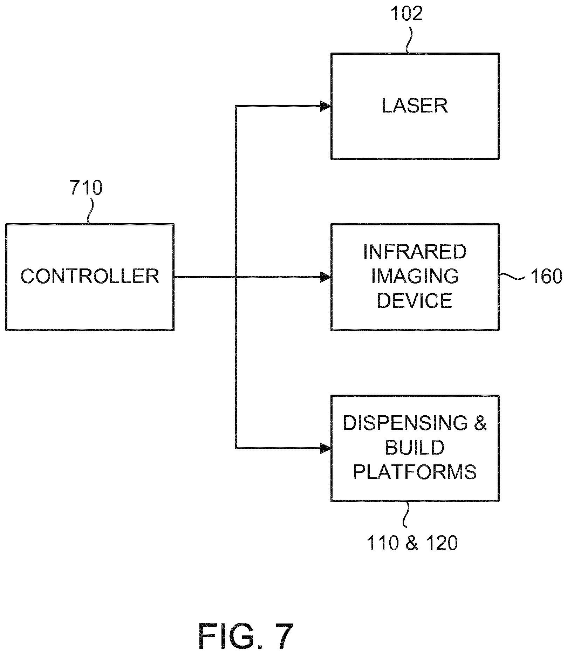

FIG. 7 illustrates a schematic representation of the control system and the additive manufacturing apparatus, in accordance with aspects described herein. Additive manufacturing apparatus 100 may include a control system including one or more controller(s) 710, including hardware and/or software for controlling functioning of some or all components of the additive manufacturing apparatus 100. Controller(s) 710 may control, for instance, operation of laser 102 (including laser power, laser speed, laser spot size, etc.), recoating blade position, speed or height, and dispensing and build platform operation (e.g., amount of height increase/decrease, etc.). In general, many operational characteristics of the apparatus may be controlled due to feedback obtained via infrared imaging device 160 and system 800, for example, laser power, laser speed, powder size, powder material, chamber temperature, laser spot size, or powder depth are a few examples of operational characteristics that can be modified as desired. In some embodiments, controller(s) 710 include one or more control data processing systems for controlling the print process and behavior of the other hardware of the printing apparatus. Control algorithms such as Proportional-Integral-Derivative (PID), Linear Quadratic Regulator (LQR), Fuzzy Logic Controller (FLC) and other suitable control algorithm can be used to calculate the multiple output parameters with respect to input data.

The infrared imaging device 160 may capture data in real-time during the build process. The data may then be evaluated, in real time, in one example, using one or more algorithms executed as software on a data processing system. The data processing system may be included as part of the apparatus 100, in one example. In other examples, the data processing system is in wired or wireless communication with infrared imaging device 160 responsible for acquiring the scan data, where the infrared imaging device communicates the data through one or more wired or wireless communication paths to the data processing system. The separate data processing system may be a controller 710 data processing system described above, or may be a different data processing system dedicated to evaluation of the acquired scan data.

In any case, the data processing system that obtains the scan data may evaluate the data, either separately or by one or more of various techniques for comparison with one or more three-dimensional CAD models, to determine whether the part(s) are being printed correctly. In a typical build setup, a designer of the parts to be printed may utilize software to build designs for all of the parts to be printed onto the build platform. Software for controlling the additive manufacturing apparatus may then (offline) 'slice' the 3D models of the part(s) to be printed into layers, with each layer to be printed as a 'pass' of the laser.

As described herein, layers of a build process may be thermographically scanned and the properties and characteristics of the printed materials may be compared to a CAD specification in order to assess the quality of the build and determine whether operational flaw(s) or defects have occurred. The scanning of one or more layers in real time during the additive manufacturing process, and the evaluation of the scan data, which may be in real-time during the build process or may be at a later time, provides online inspection of parts and process monitoring that facilitates assessment of the operational health of the additive manufacturing apparatus.

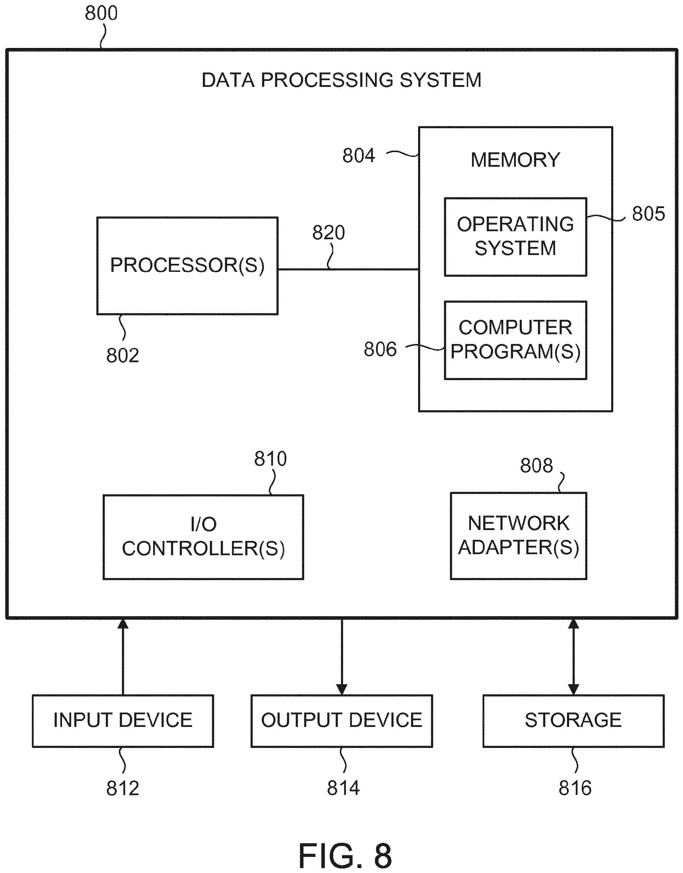

FIG. 8 illustrates one example of a data processing system to incorporate and use one or more aspects described herein. Data processing system 800 is suitable for storing and/or executing program code, such as program code for performing the processes described above, and includes at least one processor 802 coupled directly or indirectly to memory 804 through, a bus 820. In operation, processor(s) 802 obtain from memory 804 one or more instructions for execution by the processors. Memory 804 may include local memory employed during actual execution of the program code, bulk storage, and cache memories which provide temporary storage of at least some program code in order to reduce the number of times code must be retrieved from bulk storage during program code execution. A non-limiting list of examples of memory 804 includes a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Memory 804 includes an operating system 805 and one or more computer programs 806, such as one or more programs for obtaining scan data from an infrared imaging device 160, and one or more programs for evaluating the obtained scan data to determine whether operational flaws(s) have occurred with an additive manufacturing apparatus or defects have occurred in the parts, in accordance with aspects described herein.

Input/output (I/O) devices 812, 814 (including but not limited to keyboards, displays, pointing devices, etc.) may be coupled to the system either directly or through I/O controllers 810. Network adapters 808 may also be coupled to the system to enable the data processing system to become coupled to other data processing systems through intervening private or public networks. Modems, cable modem and ethernet cards are just a few of the currently available types of network adapters 808. In one example, network adapters 808 and/or input devices 812 facilitate obtaining scan data of a build process in which a three-dimensional structure is printed.

Data processing system 800 may be coupled to storage 816 (e.g., a non-volatile storage area, such as magnetic disk drives, optical disk drives, a tape drive, cloud storage, etc.), having one or more databases. Storage 816 may include an internal storage device or an attached or network accessible storage. Computer programs in storage 816 may be loaded into memory 804 and executed by a processor 802 in a manner known in the art.

Additionally, data processing system 800 may be communicatively coupled to the infrared imaging device 160 via one or more communication paths, such as a network communication path, serial connection, or similar, for communicating data between data processing system 800 and the infrared imaging device. Communication may include acquisition by the data processing system of the data acquired by the infrared imaging device 160.

The data processing system 800 may include fewer components than illustrated, additional components not illustrated herein, or some combination of the components illustrated and additional components. Data processing system 800 may include any computing device known in the art, such as a mainframe, server, personal computer, workstation, laptop, handheld computer, tablet, smartphone, telephony device, network appliance, virtualization device, storage controller, etc. In addition, processes described above may be performed by multiple data processing systems 800, working as part of a clustered computing environment. Data processing system 800, memory 804 and/or storage 816 may include data compression algorithms specifically designed for 3D printing due to the large amount of data needed to be stored for each part.

In some embodiments, aspects of the present invention may take the form of a computer program product embodied in one or more computer readable medium(s). The one or more computer readable medium(s) may have embodied thereon computer readable program code. Various computer readable medium(s) or combinations thereof may be utilized. For instance, the computer readable medium(s) may comprise a computer readable storage medium, examples of which include (but are not limited to) one or more electronic, magnetic, optical, or semiconductor systems, apparatuses, or devices, or any suitable combination of the foregoing. Example computer readable storage medium(s) include, for instance: an electrical connection having one or more wires, a portable computer diskette, a hard disk or mass-storage device, a random access memory (RAM), read-only memory (ROM), and/or erasable-programmable read-only memory such as EPROM or flash memory, an optical fiber, a portable compact disc read-only memory (CD-ROM), an optical storage device, a magnetic storage device (including a tape device), or any suitable combination of the above. A computer readable storage medium is defined to comprise a tangible medium that can contain or store program code for use by or in connection with an instruction execution system, apparatus, or device, such as a processor. The program code stored in/on the computer readable medium therefore produces an article of manufacture (such as a "computer program product") including program code.

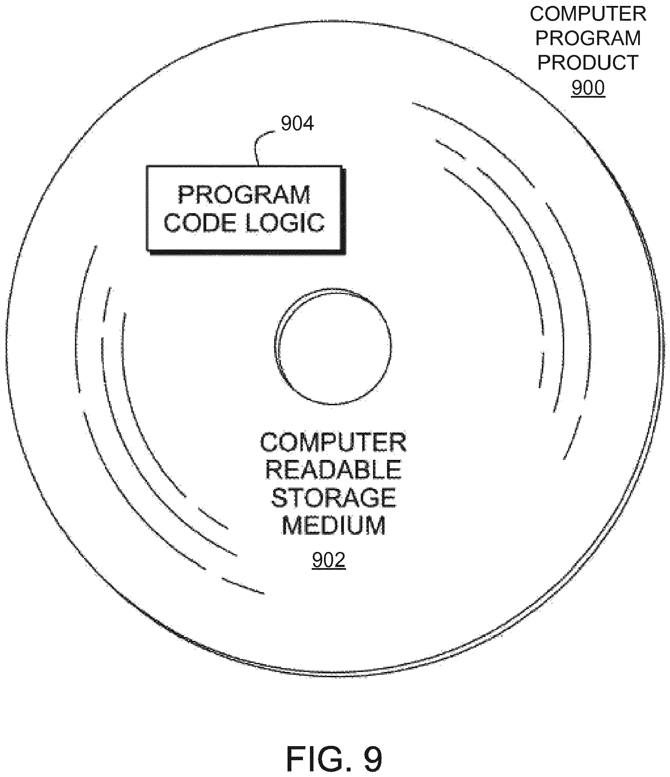

Referring now to FIG. 9, in one example, a computer program product 900 includes, for instance, one or more computer readable media 902 to store computer readable program code means or logic 904 thereon to provide and facilitate one or more aspects of the present invention. Program code contained or stored in/on a computer readable medium 902 can be obtained and executed by a data processing system (computer, computer system, etc. including a component thereof) and/or other devices to cause the data processing system, component thereof, and/or other device to behave/function in a particular manner. The program code can be transmitted using any appropriate medium, including (but not limited to) wireless, wireline, optical fiber, and/or radio-frequency. Program code for carrying out operations to perform, achieve, or facilitate aspects of the present invention may be written in one or more programming languages. In some embodiments, the programming language(s) include object-oriented and/or procedural programming languages such as C, C++, C#, Java, etc. Program code may execute entirely on the user's computer, entirely remote from the user's computer, or a combination of partly on the user's computer and partly on a remote computer. In some embodiments, a user's computer and a remote computer are in communication via a network such as a local area network (LAN) or a wide area network (WAN), and/or via an external computer (for example, through the Internet using an Internet Service Provider).

In one example, program code includes one or more program instructions obtained for execution by one or more processors. Computer program instructions may be provided to one or more processors of, e.g., one or more data processing system, to produce a machine, such that the program instructions, when executed by the one or more processors, perform, achieve, or facilitate aspects of the present invention, such as actions or functions described in flowcharts and/or block diagrams described herein. Thus, each block, or combinations of blocks, of the flowchart illustrations and/or block diagrams depicted and described herein can be implemented, in some embodiments, by computer program instructions.

The flowcharts and block diagrams depicted and described with reference to the Figures illustrate the architecture, functionality, and operation of possible embodiments of systems, methods and/or computer program products according to aspects of the present invention. These flowchart illustrations and/or block diagrams could, therefore, be of methods, apparatuses (systems), and/or computer program products according to aspects of the present invention.

In some embodiments, as noted above, each block in a flowchart or block diagram may represent a module, segment, or portion of code, which comprises one or more executable instructions for implementing the specified behaviors and/or logical functions of the block. Those having ordinary skill in the art will appreciate that behaviors/functions specified or performed by a block may occur in a different order than depicted and/or described, or may occur simultaneous to, or partially/wholly concurrent with, one or more other blocks. Two blocks shown in succession may, in fact, be executed substantially concurrently, or the blocks may sometimes be executed in the reverse order. Additionally, each block of the block diagrams and/or flowchart illustrations, and combinations of blocks in the block diagrams and/or flowchart illustrations, can be implemented wholly by special-purpose hardware-based systems, or in combination with computer instructions, that perform the behaviors/functions specified by a block or entire block diagram or flowchart.

The method and system of the present invention not only aims at evaluating and modifying the 3D manufacturing apparatus, but is also designed to evaluate each 3D printed part/structure in real time and after the build is completed. For example, the performance of a machine might be very satisfactory, but due to material or other issues some defects occur during the build. Non-destructive testing methods that have to be done to inspect each part in the past can now be eliminated using the inventive method and system, since the part/structure is inspected/assessed as it is constructed. Non-destructive testing of completed 3D parts may be undesirable because, it is very difficult to perform NDT on the parts due to complex geometry, and complex material properties, and computed tomography (CT) is very time consuming, costly and has other disadvantages. In addition, if NDT is performed after the part/structure is built, and then it is decided to scrap the part, then much time has been lost.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has" and "having"), "include" (and any form of include, such as "includes" and "including"), and "contain" (and any form contain, such as "contains" and "containing") are open-ended linking verbs. As a result, a method or device that "comprises", "has", "includes" or "contains" one or more steps or elements possesses those one or more steps or elements, but is not limited to possessing only those one or more steps or elements. Likewise, a step of a method or an element of a device that "comprises", "has", "includes" or "contains" one or more features possesses those one or more features, but is not limited to possessing only those one or more features. Furthermore, a device or structure that is configured in a certain way is configured in at least that way, but may also be configured in ways that are not listed. Additionally, the terms "determine" or "determining" as used herein can include, e.g. in situations where a processor performs the determining, performing one or more calculations or mathematical operations to obtain a result.

The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiment with various modifications as are suited to the particular use contemplated.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112, sixth paragraph, unless and until such claim limitations expressly use the phrase "means for" followed by a statement of function void of further structure. It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the disclosure may include only some of the described embodiments. Accordingly, the invention is not to be seen as limited by the foregoing description, but is only limited by the scope of the appended claims. This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following clauses:
1. A method for inspection of additive manufactured parts and monitoring operational performance of an additive manufacturing apparatus, the method comprising:
   heating an area of a build platform on which at least one part is built by the additive manufacturing apparatus;
      obtaining, in real-time during an additively manufactured build process, a thermographic scan of the area of the build platform;
      evaluating, by a processor, the thermographic scan; and
      determining, based on the evaluating, whether an operational flaw with the additive manufacturing apparatus has occurred or a defect in the at least one part has occurred.
2. The method of clause 1, further comprising a heater configured for heating the area of the build platform or the at least one part, the heater comprising one of:
   a flash lamp, a quartz lamp, a microwave tube, an induction heating unit.
3. The method of clause 1, further comprising a heater configured for heating the area of the build platform or the at least one part, the heater comprising an ultrasonic vibration heater; and
   obtaining the thermographic scan with an infrared imaging device, ultrasonic lock-in or ultrasonic sweep.
4. The method of clause 2, the heater further comprising a plurality of heaters arranged symmetrically above the build platform.
5. The method of clause 1, wherein the obtaining further comprises:
   obtaining the thermographic scan with an infrared imaging device, the infrared imaging device being one of, an infrared camera, a focal plane array infrared sensor, or a vanadium oxide microbolometer array.
6. The method of clause 5, further comprising a filter configured for use with the infrared imaging device, the filter having a spectral response between 0.8 µm and 1,000 µm.
7. The method of clause 5, further comprising:
   calibrating the infrared imaging device by scanning one or more calibration blocks, the one or more calibration blocks having at least one known defect or area with known thermal characteristics.
8. The method of clause 1, further comprising, responsive to determining that the operational flaw or the defect has occurred, modifying the build process, wherein the modifying (i) terminates building the part which is determined to exhibit the operational flaw or the defect, or (ii) building at a location of the build platform at which the operational flaw is determined to be exhibited, (iii) modifying an additive manufacturing apparatus operational characteristic, or (iv) providing an alert to a user.
9. The method of clause 8, wherein the modifying the build process comprises the modifying the additive manufacturing apparatus operational characteristic step, and the operational characteristic comprises at least one of:
   laser power, laser speed, powder size, powder material, chamber temperature, laser spot size, or powder depth.
10. The method of clause 1, wherein the operational flaw comprises a malfunction of the 3D manufacturing apparatus indicative that maintenance of the 3D manufacturing apparatus is necessary, or the defect comprises a porosity indication greater than a predetermined threshold, a lack of fusion, a micro crack or a macro-crack.
11. The method of clause 1, wherein the evaluating further comprises comparing one or more thermographic properties of the at least one part as it is being built during a build process to a computer-aided design specification describing one or more target thermographic properties for the at least one part, and wherein the determining comprises determining, based on the comparison, whether the at least one part is accurate to the computer-aided design specification.
12. A system for inspection of additive manufactured parts and monitoring operational performance of an additive manufacturing apparatus, the system comprising:
   a heater;
   an infrared imaging device;
      a memory; and
      a processor in communication with the memory, wherein the system is configured to perform:
      heating with the heater an area of a build platform on which at least one part is built by the additive manufacturing apparatus;
      obtaining with the infrared imaging device, in real-time during an additively manufactured build process, a thermographic scan of the area of the build platform;
      evaluating, by the processor, the thermographic scan; and
      determining, based on the evaluating, whether an operational flaw with the additive manufacturing apparatus has occurred or a defect in the at least one part has occurred.
13. The system of clause 12, the heater comprising one of:
   a flash lamp, a quartz lamp, a microwave tube, an induction heating unit or an ultrasonic vibration heater.
14. The system of clause 13, the heater further comprising a plurality of heaters arranged symmetrically above the build platform.
15. The system of clause 12, the infrared imaging device further comprising one of:
   an infrared camera, a focal plane array infrared sensor, or a vanadium oxide microbolometer array.
16. The system of clause 15, further comprising a filter configured for use with the infrared imaging device, the filter having a spectral response between 0.8 µm and 1,000 µm.
17. The system of clause 12, further comprising:
   one or more calibration blocks located in or near a build chamber of the additive manufacturing apparatus, the one or more calibration blocks having at least one known defect, and the one or more calibration blocks configured to be scanned by the infrared imaging device.
18. The system of clause 12, further comprising, responsive to determining that the operational flaw or the defect has occurred, modifying the build process, wherein the modifying (i) terminates building the part which is determined to exhibit the operational flaw or the defect, or (ii) building at a location of the build platform at which the operational flaw is determined to be exhibited, (iii) modifying an additive manufacturing apparatus operational characteristic, (iv) providing an alert to a user.
19. The system of clause 18, wherein the modifying the build process comprises the modifying the additive manufacturing apparatus operational characteristic step, and the operational characteristic comprises at least one of:
   laser power, laser speed, powder size, powder material, chamber temperature, laser spot size, or powder depth.
20. A computer program product for inspection of additive manufactured parts and monitoring operational performance of an additive manufacturing apparatus, the computer program product comprising:
   a non-transitory computer readable storage medium readable by a processor and storing instructions for execution by the process to perform a method comprising:
      heating with a heater an area of a build platform on which at least one part is built by the additive manufacturing apparatus;
      obtaining with an infrared imaging device, in real-time during an additively manufactured build process, a thermographic scan of the area of the build platform;
      evaluating, by the processor, the thermographic scan; and
      determining, based on the evaluating, whether an operational flaw with the additive manufacturing apparatus has occurred or a defect in the at least one part has occurred.

## Claims

1. A method (600) for inspection of additive manufactured parts (140) and monitoring operational performance of an additive manufacturing apparatus (100), the method (600) comprising:
heating (620) an area of a build platform (112) on which at least one part (140) is built by the additive manufacturing apparatus (100);
obtaining (630), in real-time during an additively manufactured build process, a thermographic scan of the area of the build platform (112);
evaluating (640), by a processor (802), the thermographic scan; and
determining (650), based on the evaluating, whether an operational flaw with the additive manufacturing apparatus (100) has occurred or a defect in the at least one part (140) has occurred.

2. The method (600) of claim 1, further comprising a heater (165) configured for heating the area of the build platform (112) or the at least one part (140), the heater (165) comprising one of:
a flash lamp, a quartz lamp, a microwave tube, an induction heating unit (301).

3. The method (600) of claim 1, further comprising a heater (165) configured for heating the area of the build platform (112) or the at least one part (140), the heater (165) comprising an ultrasonic vibration heater (410); and
obtaining the thermographic scan with an infrared imaging device (160), ultrasonic lock-in or ultrasonic sweep.

4. The method (600) of claim 2 or 3, the heater (165) further comprising a plurality of heaters arranged symmetrically above the build platform (112).

5. The method (600) of any one of claims 1 to 4, wherein the obtaining (630) further comprises:
obtaining the thermographic scan with an infrared imaging device (160), the infrared imaging device (160) being one of, an infrared camera, a focal plane array infrared sensor, or a vanadium oxide microbolometer array.

6. The method (600) of claim 5, further comprising a filter (161) configured for use with the infrared imaging device (160), the filter (161) having a spectral response between 0.8 µm and 1,000 µm.

7. The method (600) of claim 5 or 6, further comprising:
calibrating (610) the infrared imaging device (160) by scanning one or more calibration blocks (170), the one or more calibration blocks (170) having at least one known defect or area with known thermal characteristics.

8. The method (600) of any one of claims 1 to 7, further comprising, responsive to determining that the operational flaw or the defect has occurred, modifying (660) the build process, wherein the modifying (i) terminates building the part (140) which is determined to exhibit the operational flaw or the defect, or (ii) building at a location of the build platform (112) at which the operational flaw is determined to be exhibited, (iii) modifying an additive manufacturing apparatus (100) operational characteristic, or (iv) providing an alert to a user.

9. The method (600) of claim 8, wherein the modifying (660) the build process comprises the modifying (660) the additive manufacturing apparatus (100) operational characteristic step, and the operational characteristic comprises at least one of:
laser power, laser speed, powder size, powder material, chamber temperature, laser spot size, or powder depth.

10. The method (600) of any one of claims 1 to 9, wherein the operational flaw comprises a malfunction of the 3D manufacturing apparatus (100) indicative that maintenance of the 3D manufacturing apparatus (100) is necessary, or the defect comprises a porosity indication greater than a predetermined threshold, a lack of fusion, a micro crack or a macro-crack.

11. The method (600) of any one of claims 1 to 10, wherein the evaluating (640) further comprises comparing one or more thermographic properties of the at least one part (140) as it is being built during a build process to a computer-aided design specification describing one or more target thermographic properties for the at least one part (140), and wherein the determining comprises determining, based on the comparison, whether the at least one part (140) is accurate to the computer-aided design specification.

12. A system (800) for inspection of additive manufactured parts (140) and monitoring operational performance of an additive manufacturing apparatus (100), the system (800) comprising:
a heater (165);
an infrared imaging device (160);
a memory (804); and
a processor (802) in communication with the memory (804), wherein the system (800) is configured to perform:
heating (620) with the heater (165) an area of a build platform (112) on which at least one part (140) is built by the additive manufacturing apparatus (100);
obtaining (630) with the infrared imaging device (160), in real-time during an additively manufactured build process, a thermographic scan of the area of the build platform (112);
evaluating (640), by the processor (802), the thermographic scan; and
determining (650), based on the evaluating (640), whether an operational flaw with the additive manufacturing apparatus (100) has occurred or a defect in the at least one part (140) has occurred.

13. The system (800) of claim 12, the heater (165) comprising one of:
a flash lamp, a quartz lamp, a microwave tube, an induction heating unit (301) or an ultrasonic vibration heater (410), wherein the heater (165) further comprising a plurality of heaters (165) arranged symmetrically above the build platform (112).

14. The system (800) of claim 12 or 13, the infrared imaging device (160) further comprising one of:
an infrared camera, a focal plane array infrared sensor, or a vanadium oxide microbolometer array.

15. A computer program product (806) for inspection of additive manufactured parts (140) and monitoring operational performance of an additive manufacturing apparatus (100), the computer program product (806) comprising:
a non-transitory computer readable storage medium (816) readable by a processor (802) and storing instructions for execution by the process to perform a method (600) comprising:
heating (620) with a heater (165) an area of a build platform (112) on which at least one part (140) is built by the additive manufacturing apparatus (100);
obtaining (630) with an infrared imaging device (160), in real-time during an additively manufactured build process, a thermographic scan of the area of the build platform (112);
evaluating (640), by the processor (802), the thermographic scan; and
determining (650), based on the evaluating (640), whether an operational flaw with the additive manufacturing apparatus (100) has occurred or a defect in the at least one part (140) has occurred.
